(19)

Europäisches
Patentamt
European
Patent Office
Office européen
des brevets

(11) **EP 1 965 231 A2**

(12) **EUROPEAN PATENT APPLICATION**

(43) Date of publication:
**03.09.2008 Bulletin 2008/36**

(51) Int Cl.:
***G02B 5/02*** (2006.01)　　　***G02F 1/13357*** (2006.01)

(21) Application number: **08151290.7**

(22) Date of filing: **11.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **12.02.2007　US 705309**

(71) Applicant: **Rohm and Haas Denmark Finance A/S
2100 Copenhagen (DK)**

(72) Inventors:
　• **LANEY, Thomas M.
　Spencerport, NY 14559 (US)**

　• **AYLWARD, Peter T.
　Hilton, NY 14468 (US)**

(74) Representative: **Buckley, Guy Julian
　Rohm and Haas Europe Services ApS - UK
　Branch
　European Patent Department
　4th Floor
　22 Tudor Street
　London
　EC4Y 0AY (GB)**

(54) **Optical Diffuser Film and Light Assembly for liquid crystal displays**

(57)　　A light assembly (110,120) comprises a light source (114), an optically transmissive self-supporting substrate (122), and coupled with but unattached to the substrate (122), a voided high Tg semi-crystalline polymeric optical diffuser film (124) that shrinks less than 1 % as a result of thermal shrinkage testing.
The assembly is used in a liquid crystal display (100).

**EP 1 965 231 A2**

## Description

### FIELD OF THE INVENTION

The invention relates to optical displays, and more particularly to liquid crystal displays (LCDs) that may be used in LCD monitors and LCD televisions.

### BACKGROUND

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example some LCD monitors and LCD televisions (LCD-TVs) are directly illuminated using a number of light sources positioned behind the LCD panel. This arrangement is increasingly common with larger displays, because the light power requirements, to achieve a certain level of display brightness, increase with the square of the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, and so a diffuser plate is used to smooth the illumination profile at the back of the LCD device.

Currently, LCD-TV diffuser plates employ a polymeric matrix of polymethyl methacrylate (PMMA) with a variety of dispersed phases that include glass, polystyrene beads, and $CaCO_3$ particles. These plates often deform or warp after exposure to the elevated humidity and high temperature caused by the lamps. In addition, the diffusion plates require customized extrusion compounding to distribute the diffusing particles uniformly throughout the polymer matrix, which further increases costs.

A previous disclosure, U.S. Pat. Publication No. 2006/0082699 describes one approach to reducing the cost of diffusion plates by laminating separate layers of a self-supporting substrate and an optically diffuse film. Although this solution is novel the need to use adhesives to laminate these layers together results in reduced efficiency of the system by adding light absorption materials. Also the additional processing cost to laminate the layers together is self-defeating. Also, this previous disclosure does not teach the materials and structure for an unattached diffuser film. It is desirable to have an unattached diffuser film, which must have dimensional stability as well as high optical transmission while maintaining a high level of light uniformization. Further, it is desirable for such a diffuser to have additional heat insulation value to reduce the heat gain from the light sources to the LC layer above the diffuser. Voiding is a well-known means to achieve both the optical requirements and the insulation requirements of the diffuser. A thin diffuser is also desirable as manufacturers are constantly looking for means to thin the profile of LCD screens. Producing a thin voided film that meets these requirements is very challenging as thin voided films are highly prone to shrinkage under elevated temperatures. Therefore, an object of the present invention is to provide a voided polymeric optical diffuser film which can be placed adjacent to an optically transmissive self-supporting substrate, unattached to said substrate, to provide the optical smoothing function of previous plate diffusers at a very low cost. The optical diffuser film is unique in that it provides a high level of optical function and meets dimensional stability requirements under specified thermal testing even at low thicknesses.

### SUMMARY OF THE INVENTION

One embodiment of this invention is a light assembly containing a voided high Tg semi-crystalline polymeric optical diffuser film with shrinkage of less than 1% as a result of thermal shrinkage testing. This film is useful in replacing the optical function of diffuser plates typically used today in backlit LCD displays.

Another embodiment of the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films and an optically transmissive self-supporting substrate. The arrangement of light management films comprises at least a first voided polymeric optical diffuser film. The arrangement of light management films optionally comprises other optical layers. Other optical layers may include a bead coated collimation film, a light directing film and a reflective polarizer.

Another embodiment of the invention is directed to a liquid crystal display (LCD) unit that has a light source and an LCD panel that includes an upper plate, a lower plate, and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films and an optically transmissive self-supporting substrate. The arrangement of light management films comprises at least a first voided polymeric optical diffuser film and comprising a structured surface to control the direction of light rays transmitted through the film. The arrangement of light management films optionally comprises other optical layers. Other optical layers may include a light directing film and a reflective polarizer.

## BRIEF DESCRIPTION OF THE DRAWINGS

The invention may be more completely understood in consideration of the following detailed description of various embodiments of the invention in connection with the accompanying drawings, in which:

FIG. 1 schematically illustrates a typical back-lit liquid crystal display device that uses a diffuser plate;
FIG. 2 schematically illustrates an arrangement of light management layers that is capable of using an optically transmissive self-supporting substrate and a voided polymeric optical diffuser film according to principles of the present invention;
FIG. 3 schematically illustrates an arrangement of light management layers that is capable of using an optically transmissive self-supporting substrate and a voided polymeric optical diffuser film with a structured surface to control the direction of light rays transmitted through the film according to principles of the present invention.
FIG. 4 shows the testing apparatus useful for the invention.
FIG 5 shows in graphical form the transmission of the tested samples.
FIG 6 is a graph showing optical uniformity of one of the samples.

## DETAILED DESCRIPTION OF THE INVENTION

The present invention is applicable to light assemblies and particularly liquid crystal displays (LCDs, or LC displays), and is particularly applicable to LCDs that are directly illuminated from behind, for example as are used in LCD monitors and LCD televisions (LCD-TVs).

The diffuser plates currently used in LCD-TVs are based on a polymeric matrix, for example polymethyl methacrylate (PMMA), polycarbonate (PC), or cyclo-olefins, formed as a rigid sheet. The sheet contains diffusing particles, for example, organic particles, inorganic particles or voids (bubbles). These plates often deform or warp after exposure to the elevated temperatures of the light sources used to illuminate the display. These plates also are more expensive to manufacture and to assemble in the final display device.

The invention is directed to a directly illuminated LCD device that has an arrangement of light management layers positioned between the LCD panel itself and the light source. The arrangement of light management layers includes an optically transmissive self-supporting organic or inorganic substrate and a voided polymeric optical diffuser film possessing a specific transmission and haze level placed directly adjacent to one side of the substrate, but unattached to said substrate. The transmission and haze levels of each component are designed to provide a direct-lit LC display whose brightness is relatively uniform across the display.

The optically transmissive self-supporting organic or inorganic substrate S of the present invention are simple to manufacture and are commercially available as a commodity item. Voided polymeric optical diffuser films of the present invention are simple to manufacture and provide a high degree of flexibility in the materials and processes used in manufacturing. In the present invention, the structural and optical requirements are separated: the substrate provides the structural performance and the unattached diffusing layer, provides the optical performance. By separating these functions, the cost advantages of using common transparent materials and common diffuser sheets can be exploited, to reduce overall costs. By not attaching the substrate and the diffuser film a high level of optical performance and a low manufacturing cost is realized. This also permits the introduction of warp resistant plates, for example glass plates, at low cost. In addition, it is easier to control the diffusion properties more precisely when the diffuser is contained in a film rather than a substrate. By using a voided diffuser film a higher level of insulation can be provided at any given thickness of the diffuser. By being unattached, however, the diffuser must meet thermal shrinkage requirements of other optical films in the arrangement.

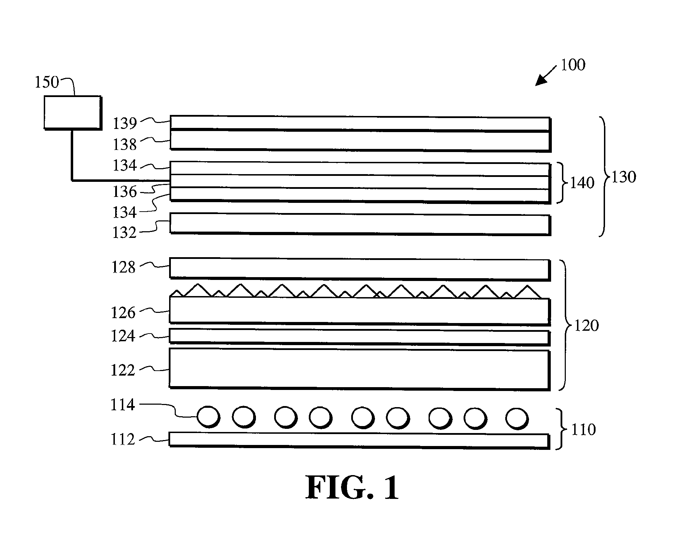

A schematic exploded view of an exemplary embodiment of a direct-lit LC display device 100 is presented in FIG. 1. Such a display device 100 may be used, for example, in an LCD monitor or LCD-TV. The display device 100 is based on the use of a front panel assembly 130, comprising a LC panel 140, which typically comprises a layer of LC 136 disposed between panel plates 134. The plates 134 are often formed of glass, and may include electrode structures and alignment layers on their inner surfaces for controlling the orientation of the liquid crystals in the LC layer **136.** The electrode structures are commonly arranged so as to define LC panel pixels, areas of the LC layer where the orientation of the liquid crystals can be controlled independently of adjacent areas. A color filter may also be included with one or more of the plates **134** for imposing color on the image displayed.

An upper absorbing polarizer **138** is positioned above the LC layer **136** and a lower absorbing polarizer **132** is positioned below the LC layer **136.** The absorbing polarizers **138, 132** and the LC panel **140** in combination control the transmission of light from the backlight **110** through the display **100** to the viewer. In some LC displays, the absorbing polarizers **138, 132** may be arranged with their transmission axes perpendicular. When a pixel of the LC layer 136 is not activated, it may not change the polarization of light passing there through. Accordingly, light that passes through the lower absorbing polarizer **132** is absorbed by the upper absorbing polarizer **138,** when the absorbing polarizers **138, 132** are aligned perpendicularly. When the pixel is activated, on the other, hand, the polarization of the light passing there through is rotated, so that at least some of the light that is transmitted through the lower absorbing polarizer **132** is also transmitted through the upper absorbing polarizer **138.** Selective activation of the different pixels of the LC layer **136,** for example by a controller **150,** results in the light passing out of the display at certain desired locations, thus forming an image seen by the viewer. The controller may include, for example, a computer or a television controller that receives and displays television images. One or more optional layers **139** may be provided over the upper absorbing polarizer **138,** for example to provide mechanical and/or environmental protection to the display surface. In one exemplary embodiment, the layer **139** may include a hardcoat over the absorbing polarizer **138.**

It will be appreciated that some type of LC displays may operate in a manner different from that described above. For example, the absorbing polarizers may be aligned parallel and the LC panel may rotate the polarization of the light when in an unactivated state. Regardless, the basic structure of such displays remains similar to that described above.

The backlight **110** includes a number of light sources **114** that generate the light that illuminates the LC panel **130.** The light sources **114** used in a LCD-TV or LCD monitor are often linear, cold cathode, fluorescent tubes that extend across the display device **100.** Other types of light sources may be used, however, such as filament or arc lamps, light emitting diodes (LEDs), flat fluorescent panels or external fluorescent lamps. This list of light sources is not intended to be limiting or exhaustive, but only exemplary.

The backlight **110** may also include a reflector **112** for reflecting light propagating downwards from the light sources **114,** in a direction away from the LC panel **140.** The reflector **112** may also be useful for recycling light within the display device **100,** as is explained below. The reflector **112** may be a specular reflector or may be a diffuse reflector. One example of a specular reflector that may be used as the reflector **112** is Vikuiti® Enhanced Specular Reflection (ESR) film available from 3M Company, St. Paul, Minn. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement **120** of light management layers is positioned between the backlight **110** and the front panel assembly **130.** The light management layers affect the light propagating from backlight **110** so as to improve the operation of the display device **100.** For example, the arrangement **120** of light management layers may include a diffuser plate **122.** The diffuser plate **122** is used to diffuse the light received from the light sources, which results in an increase in the uniformity of the illumination light incident on the LC panel **140.** Consequently, this results in an image perceived by the viewer that is more uniformly bright.

The arrangement **120** of light management layers may also include a reflective polarizer **128.** The light sources **114** typically produce unpolarized light but the lower absorbing polarizer **132** only transmits a single polarization state, and so about half of the light generated by the light sources **114** is not transmitted through to the LC layer **136.** The reflecting polarizer **128,** however, may be used to reflect the light that would otherwise be absorbed in the lower absorbing polarizer, and so this light may be recycled by reflection between the reflecting polarizer **128** and the reflector **112.** At least some of the light reflected by the reflecting polarizer **128** may be depolarized, and subsequently returned to the reflecting polarizer **128** in a polarization state that is transmitted through the reflecting polarizer **128** and the lower absorbing polarizer **132** to the LC layer **136.** In this manner, the reflecting polarizer **128** may be used to increase the fraction of light emitted by the light sources **114** that reaches the LC layer **136,** and so the image produced by the display device **100** is brighter.

Any suitable type of reflective polarizer may be used, for example, multilayer optical film (MOF) reflective polarizers; diffusely reflective polarizing film (DRPF), such as continuous/disperse phase polarizers, wire grid reflective polarizers or cholesteric reflective polarizers.

The arrangement **120** of light management layers may also include a light directing film **126.** A light directing film is one that includes a surface structure that redirects off-axis light in a direction closer to the axis of the display. This increases the amount of light propagating on-axis through the LC layer **136,** thus increasing the brightness of the image seen by the viewer. One example is a prismatic light directing film, which has a number of prismatic ridges that redirect the illumination light, through refraction and reflection.

The arrangement **120** of light management layers may also include a light collimating diffuser film **124.** A light collimating diffuser film is typically a polyester sheet coated with polymertic microbeads and a binder and also helps to re-direct off-axis light in a direction closer to the axis of the display.

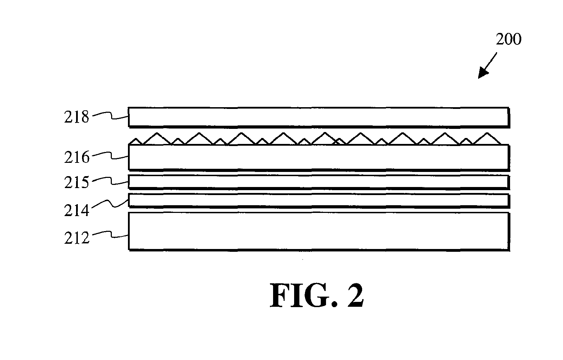

Unlike diffuser plates used in conventional LCD-TVs, the present invention uses an arrangement of light management layers that have separate structural and diffusing members. An optically transmissive self-supporting substrate and an unattached voided polymeric optical diffuser film perform these functions, respectively. One exemplary embodiment of the present invention is schematically illustrated in FIG. 2. The arrangement of light management layers **200** includes an optically transmissive self-supporting substrate **212** and a voided polymeric optical diffuser film **214** adjacent to but un-attached to the substrate. Other optical films can be added to the arrangement of light management layers above the voided polymeric optical diffuser film **214.** These other optical films may include a bead coated light collimation film **215,** a prismatic light directing film 216, and a reflective polarizer **218.**

The substrate **212** is a sheet of material that, like that of the plate diffuser in conventional back lights, is self-supporting, and is used to provide support to the layers above in the light management arrangement. Self-Supporting is thus defined as bending insignificantly(less than 1/180 of its longest dimension) under its own weight even with the additional weight of other layers in the arrangement. The substrate **212** may be, for example, up to a few mm thick, depending on the size of the display. For example, in one exemplary embodiment, a 30" LCD-TV has a 2 mm thick bulk diffuser plate. In another exemplary embodiment, a 40" LCD-TV has a 3 mm thick bulk diffuser plate.

The substrate **212** may be made of any material that is substantially transparent to visible light, for example, organic or inorganic materials, including glasses and polymers. Suitable glasses include float glasses, i.e. glasses made using a float process, or LCD quality glasses, referred as LCD glass, whose characteristic properties, such as thickness and purity, are better controlled than float glass. One approach to forming LCD glass is to form the glass between rollers.

The substrate **212,** the diffuser film **214,** and one or more other light management layers may be included in a light management arrangement disposed between the backlight and the LCD panel. The substrate **212** provides a stable structure for supporting the light management arrangement. The substrate **212** is less prone to warping than conventional diffuser plate systems, particularly if the supporting substrate **212** is formed of a warp-resistant material such as glass.

Suitable polymer materials used to make the substrate **212** may be amorphous or semi-crystalline, and may include homopolymer, copolymer or blends thereof. Example polymer materials include, but are not limited to, amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly (methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

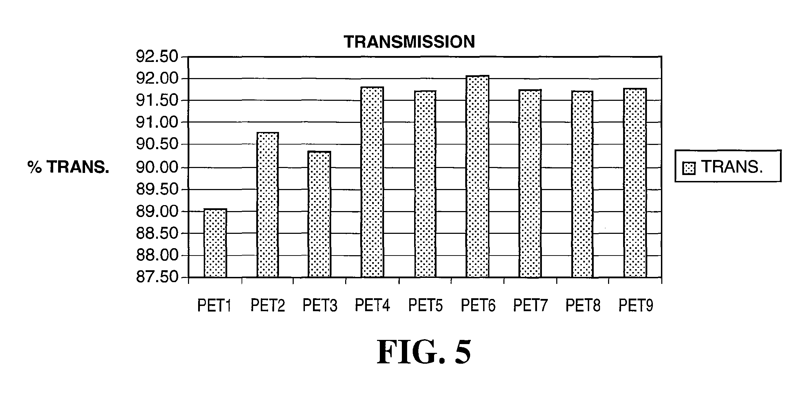

Exemplary embodiments of the voided polymeric optical diffuser film 214 include a high Tg (glass transition temperature above 80°C) semi-crystalline polymer matrix containing voids and void initiating particles. A high Tg semi-crystalline polymer matrix is preferred as it may be substantially transparent to visible light, can be readily stretch voided, and can possess dimensional stability having a shrinkage of less than 1.0% after being tested at elevated temperatures up to 85C(this is the condition typically required by films in direct backlit LCD's). Preferable polymers to meet all these criteria are polyesters and their copolymers. Most preferred are poly(ethylene terephthalate) (PET); poly(ethylene naphthalate)(PEN)polyesters and any of their copolymers. PET is most suitable as it is much lower in cost than PEN. FIG. 5 shows the light transmission of several commercially available PET resins. Transmission is measured per method ASTM D-1003. Some grades have a transmission below 90.5%. It is preferred that PET grades with optical transmissions above 90.5% are used to limit the amount of light absorption by the diffuser film.

The void initiating particles may be any type of particle that is incompatible with the matrix polymer. These particles can be inorganic or organic. Inorganic particles can include any of calcium carbonate, barium sulfate, titanium dioxide, or any other inorganic compound that can be melt blended into a polymer. Typical organic void initiating particles are polymers that are immiscible with the matrix polymer. These are preferred as resin pellets of these immiscible polymers can be simply dry blended with the resin pellets of the matrix polymer and extruded together to form a cast film. Inorganic particles require a pre-mixing or melt compounding, which adds processing cost. Preferred organic void initiating particles are polyolefins. Most preferred is polypropylene. The void initiating particles should be added so as to produce enough diffusivity to function as a diffuser yet not be so opaque that the optical luminance of the LCD display is significantly reduced. Preferred loadings of the void initiating particles are 3 to 25 wt % of the entire film. The most preferred loadings are 10 to 20 wt%. %. For optimal diffuser optical performance the void initiator loading multiplied by the thickness, in um, of the voided layer after stretching should be maintained in a range between 750 and 1500. Preferably this range is between 950 and 1350.

The voided polymeric optical diffuser 214 is preferably produced by a process of dry blending the matrix polymer and an immiscible polymer additive. Blending may be accomplished by mixing finely divided, e.g. powdered or granular, matrix polymer and polymeric additive and, thoroughly mixing them together, e.g. by tumbling them. The resulting mixture is then fed to the film forming extruder. Blended matrix polymer and immiscible polymeric additive which has been extruded and, e.g. reduced to a granulated form, can be successfully re-extruded into a voided polymeric optical diffuser. It is thus possible to re-feed scrap film, e.g. as edge trimmings, through the process. Alternatively, blending may be effected by combining melt streams of matrix polymer and the immiscible polymer additive just prior to extrusion. If the polymeric additive is added to the polymerization vessel in which the matrix polymer is produced, it has been found that voiding and hence diffusivity is not developed during stretching. This is thought to be on account of some form of chemical or physical bonding which may arise between the additive and matrix polymer during thermal processing.

The extrusion, quenching and stretching of the voided polymeric optical diffuser film may be effected by any process which is known in the art for producing oriented film, e.g. by a flat film process or a bubble or tubular process. The flat film process is preferred for making voided polymeric optical diffuser according to this invention and involves extruding the blend through a slit die and rapidly quenching the extruded web upon a chilled casting drum so that the matrix polymer component of the film is quenched into the amorphous state. The film base is then biaxially oriented by stretching in mutually perpendicular directions at a temperature above the glass-rubber transition temperature of the matrix polymer. Generally the film is stretched in one direction first and then in the second direction although stretching may be effected in both directions simultaneously if desired. In a typical process the film is stretched firstly in the direction of extrusion over a set of rotating rollers or between two pairs of nip rollers and is then stretched in the direction transverse thereto by means of a tenter apparatus. The film may be stretched in each direction to 2.5 to 5.0 times its original dimension in each direction of stretching. Upon stretching voids initiate around the void initiating particles. The higher the concentration of void initiating particle the higher the degree of void volume that is produced. The stretching also enhances the degree of crystallinity of the high Tg polymer matrix of the film thus making the film less prone to shrinking under test conditions. The final stretched thickness of the film is preferably in the 1.0 to 10.0 mil thickness range. The most preferred thickness range is between 2.0 and 6.0 mils. This is significantly thinner than the optically transmissive self-supporting substrate and together their total thickness can be maintained in the range of that of the currently used plate diffusers.

After the film has been stretched and a voided polymeric optical diffuser film formed, it is heat set by heating to a temperature sufficient to crystallize the matrix polymer whilst restraining the voided polymeric optical diffuser against retraction in both directions of stretching. This process enables the film to meet shrinkage requirements of less than 1.0% when tested at temperatures up to 80C. The voiding tends to collapse as the heat setting temperature is increased and the degree of collapse increases as the temperature increases. Hence specular light transmission increases with an increase in heat setting temperatures. Whilst heat setting temperatures up to about 230 C can be used without destroying the voids, temperatures between 150 C and 200 C generally result in a greater degree of voiding and more efficient duffusivity, as well as result in low shrinkage after thermal testing.

The voided polymeric optical diffuser film **214** may also include a whitener. Typically whiteners are added at levels much lower than void initiators and thus do not contribute to voiding but do improve whiteness and to some extent diffusivity of the film. Whiteners are typically inorganic compounds, TiO2 being most preferred. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.25 and 5.0 wt%.

The voided polymeric optical diffuser film **214** may also include optical brighteners that convert UV light into visible light. Such optical brighteners must be chosen from those which are thermally stable and can survive the extrusion temperatures used to fabricate the voided polymeric optical diffuser film. Preferred optical brighteners comprise benzoxazolyll-stilbene compounds. The most preferred optical brightener comprises 2,2'-(1,2-ethenediyldi-4,1-phenylene) bisbenzoxazole. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.01 and 0.1 wt%. In the most preferred embodiment the optical brightener will be added to attain a concentration between 0.02 and 0.05%wt.

The voided polymeric optical diffuser film **214** may also include an antistatic coating to prevent dirt attraction. Anyone of the known antistatic coatings could be employed.

The voided polymeric optical diffuser film **214** may also be fabricated as a multilayered or coextruded film. Advantages of doing so would be to enable the use of a very thin film yet still meet both optical and thermal stability or shrinkage requirements. Thin films require high loadings of void initiator and thus high voiding to achieve the optical diffusion performance of a plate diffuser. At these high levels of voiding the film is much less dimensionally stable at elevated temperatures. By creating a film with a non-voided layer adjacent to one or both sides of a voided layer the dimensional stability at elevated temperatures can be improved. Such multilayered films are produced the same as previously discussed except a second extruder is used to melt and pump neat matrix polymer. This neat polymer extrusion flow is delivered along with the voided layer extrusion flow, previously described, into a co-extrusion die assembly. A multilayered cast film is then produced with a layer of neat polymer on one or both sides of the voided layer. This cast film is then quenched and stretched as previously discussed.

The optically transmissive self-supporting substrate **212** or the optical diffuser film **214** may be provided with protection from ultraviolet (UV) light, for example by including UV absorbing material or material in one of the layers that is resistant to the effects of UV light. Suitable UV absorbing compounds are available commercially, including, e. g., Cyasorb® UV-1164, available from Cytec Technology Corporation of Wilmington, Del., and Tinuvin® 1577, available from Ciba Specialty Chemicals of Tarrytown, N.Y.

Other materials may be included in the optically transmissive self-supporting substrate **212** or the optical diffuser film **214** to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful HALS composition is Tinuvin 622.

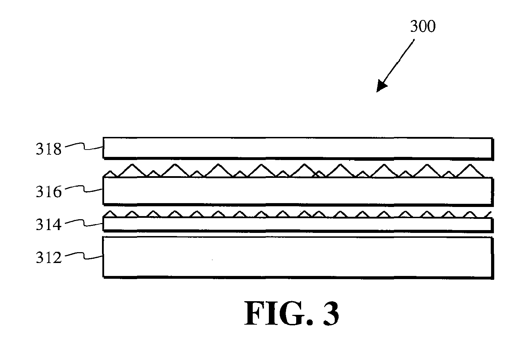

Another exemplary embodiment of the present invention is schematically illustrated in FIG. 3. The arrangement of light management layers **300** includes an optically transmissive self-supporting substrate **312** and a voided polymeric optical diffuser film **314** adjacent to but un-attached to the substrate. Other optical films can be added to the arrangement of light management layers above the voided polymeric optical diffuser film **314**. These other optical films may include a, a prismatic light directing film **316,** and a reflective polarizer **318.**

The voided polymeric optical diffuser film 314 of this arrangement has been fully described previously as that of the voided polymeric optical diffuser film 214 of fig. 2 in the prior arrangement. The voided polymeric optical diffuser film 314, however, further comprises a structured surface on the side opposite the optically transmissive self-supporting substrate 312. The function of the structures on this surface of the voided polymeric optical diffuser film 314 is to direct light rays which transmit through the film into a more normal direction to the film surface. The structures on this surface are preferably finite curved prismatic structures. Such structures have been fully described in U.S. Pat. Publication no. 2006/0092490, which is incorporated by reference. Optically transparent microbeads or an optical modifying layer can optionally be coated onto these structures to further help control direction of light rays transmitting through the film. Such coatings have been fully described in previously filed U.S. Patent Application no. 60/833,713, which provides a light redirecting film comprising a light exit surface bearing (a) optical elements and (b) an optical modification layer containing microbeads and a binder disposed over the optical elements wherein said light redirecting film has an optical gain of at least 1.20. The optical modification layer applied to the surface of the optical elements allows more incident light to pass through the light redirecting film compared to prior art light redirecting films. It has been found that the optical modification layer applied to the surface of the optical elements "frustrates" or reduces the amount of total internal reflection in the light redirecting film. The frustration of the total internal reflection of the light redirecting film results in between 5 and 14% higher light output compared to the same light redirecting film without the optical modification layer.

Such layers can further control the direction of light transmitting through the voided polymeric optical diffuser film.

## EXAMPLES

Various samples of voided polymeric optical diffuser films were prepared and their performance in combination with an optically transmissive self-supporting substrate was compared to commercially available diffuser films as well as that of the diffuser plate used in a commercially available LCD-TV. The voided polymeric optical diffuser films and optically transmissive self-supporting substrates together were tested for brightness and optical uniformity. The voided polymeric optical diffuser films were tested individually for thermal shrinkage as well. Commercially available foamed or voided films that have been identified as potential diffuser layers were also tested in combination with optically transmissive self-supporting substrates for brightness and optical uniformity and where evaluated as unattached films were tested individually for shrinkage as well.

Sample EX-1

PET(#7352 from Eastman Chemicals) was dry blended with Polypropylene("PP", Huntsman P4G2Z-159) at 22% by weight and with a 1 part PET to 1 part TiO2 concentrate (PET 9663 E0002 from Eastman Chemicals) at 1.7% by weight. This blend was then dried in a desiccant dryer at 65°C for 12 hours.

Cast sheets were extruded using a 2-1/2" extruder to extrude the PET/PP/TiO2 blend. The 275°C meltstream was fed into a 7 inch film extrusion die also heated at 275°C. As the extruded sheet emerged from the die, it was cast onto a quenching roll set at 55°C. The PP in the PET matrix dispersed into globules between 10 and 30 um in size during extrusion. The final dimensions of the continuous cast sheet were 18 cm wide and 305 μm thick. The cast sheet was then stretched at 110°C first 3.2 times in the X-direction and then 3.4 times in the Y-direction. The stretched sheet was then Heat Set at 150°C.

During stretching voids were initiated around the particles of PP that were dispersed in the cast sheet. These voids grew during stretching and resulted in significant void volume. The resulting the thickness was 61 um. This film was evaluated optically as an unattached diffuser film in combination with a 2 mm thick plate of float glass.

Sample EX-2

PET(#7352 from Eastman Chemicals) was dry blended with Polypropylene("PP", Huntsman P4G2Z-159) at 20% by weight and with a 1 part PET to 1 part TiO2 concentrate (PET 9663 E0002 from Eastman Chemicals) at 2.0% by weight. This blend was then dried in a desiccant dryer at 65°C for 12 hours.

Cast sheets were extruded using a 1-1/4" extruder to extrude the PET/PP/TiO2 blend. The 275°C meltstream was fed into a 7-inch film extrusion die also heated at 275°C. As the extruded sheet emerged from the die, it was cast onto a quenching roll set at 55°C. The PP in the PET matrix dispersed into globules between 10 and 30 um in size during extrusion. The final dimensions of the continuous cast sheet were 18 cm wide and 300 um thick. The cast sheet was then stretched at 110°C first 3.2 times in the X-direction and then 3.4 times in the Y-direction. The stretched sheet was then Heat Set at 150°C.

During stretching voids were initiated around the particles of PP that were dispersed in the cast sheet. These voids grew during stretching and resulted in significant void volume. The resulting the thickness was 53 μm. This film was evaluated optically as an unattached diffuser film in combination with a 2 mm thick plate of float glass.

Sample EX-3

PET(#7352 from Eastman Chemicals) was dry blended with Polypropylene("PP", Huntsman P4G2Z-159) at 20% by weight and with a 1 part PET to 1 part TiO2 concentrate (PET 9663 E0002 from Eastman Chemicals) at 2.0% by weight. This blend was then dried in a desiccant dryer at 65°C for 12 hours.

Also, neat PET(#7352 from Eastman Chemicals) was dried in a desicant dryer at 140 C for 12 hours.

Coextruded cast sheets were extruded using a 2-1/2" extruder to extrude the PET/PP/TiO2 blend and a 1-1/2" extruder to extrude the neat PET. The 275°C meltstreams were fed into a 7 inch film coextrusion die also heated at 275°C. An ABA film structure with neat PET "A" layers and the blend as the "B" layer were formed in the coextrusion die. As the extruded sheet emerged from the die, it was cast onto a quenching roll set at 55°C. The PP in the PET matrix dispersed into globules between 10 and 30 um in size during extrusion. The final dimensions of the continuous cast sheet were 18 cm wide and 1016 um thick. The "A" layers of neat PET were each 356 um thick while the core "B" layer was 304 um thick. The cast sheet was then stretched at 110 C first 3.2 times in the X-direction and then 3.4 times in the Y-direction. The stretched sheet was then Heat Set at 150°C.

During stretching voids were initiated around the particles of PP that were dispersed in the cast sheet. These voids grew during stretching and resulted in significant void volume. The resulting the thickness was 112 um with the voided "B" layer being 50 μm thick. This film was evaluated optically as an unattached diffuser film in combination with a 2 mm thick plate of float glass.

Sample EX-4

PET(#7352 from Eastman Chemicals) was dry blended with Polypropylene("PP", Huntsman P4G2Z-159) at 7% by weight and with a 1 part PET to 1 part TiO2 concentrate (PET 9663 E0002 from Eastman Chemicals) at 0.5% by weight. This blend was then dried in a desiccant dryer at 65°C for 12 hours.

Cast sheets were extruded using a 2-1/2" extruder to extrude the PET/PP/TiO2 blend. The 275°C meltstream was fed into a 7 inch film extrusion die also heated at 275°C. As the extruded sheet emerged from the die, it was cast onto a quenching roll set at 55°C. The PP in the PET matrix dispersed into globules between 10 and 30 um in size during extrusion. The final dimensions of the continuous cast sheet were 18 cm wide and 1140 um thick. The cast sheet was then stretched at 110°C first 3.2 times in the X-direction and then 3.4 times in the Y-direction. The stretched sheet was then Heat Set at 150 °C.

During stretching voids were initiated around the particles of PP that were dispersed in the cast sheet. These voids grew during stretching and resulted in significant void volume. The resulting the thickness was 140 um. This film was evaluated optically as an unattached diffuser film in combination with a 2 mm thick plate of float glass.

Sample EX-5

PET(#7352 from Eastman Chemicals) was dry blended with Polypropylene("PP", Huntsman P4G2Z-159) at 20% by weight but no TiO2 concentrate was added. This blend was then dried in a desiccant dryer at 65 °C for 12 hours.

Cast sheets were extruded using a 1-1/4" extruder to extrude the PET/PP/TiO2 blend. The 275C meltstream was fed into a 7 inch film extrusion die also heated at 275 C. As the extruded sheet emerged from the die, it was cast onto a quenching roll set at 55C. The PP in the PET matrix dispersed into globules between 10 and 30 um in size during extrusion. The final dimensions of the continuous cast sheet were 18 cm wide and 300 um thick. The cast sheet was then stretched at 110 C first 3.2 times in the X-direction and then 3.4 times in the Y-direction. The stretched sheet was then Heat Set at 150 C.

During stretching voids were initiated around the particles of PP that were dispersed in the cast sheet. These voids grew during stretching and resulted in significant void volume. The resulting the thickness was 51 um. This film was evaluated optically as an unattached diffuser film in combination with a 2 mm thick plate of float glass.

Control Sample C1

This comparative sample was the 2.03 mm thick native plate diffuser supplied in the commercial TV used as the test bed for all optical measurements. An Aquos 20" DBL TV by Sharp Electronics Corporation was used.

Control Sample C2

This sample was a commercial foam film 100 um thick. It comprised a polyolefin that is foamed by a chemical forming agent. The material is manufactured by Berwick Industires, Berwick, PA.

This film was evaluated optically as an unattached diffuser film in combination with a 2 mm thick plate of float glass.

Control Sample C3

This sample was a commercial biaxially oriented voided polypropylene 81 um thick. The product name is Polylith GC-1 by Granwell.

This film was evaluated optically as an unattached diffuser film in combination with a 2 mm thick plate of float glass.

Control Sample C4

This sample was a 380um commercial acrylic foam tape. The product name is VHB™ No. 4920 by 3M™. This film has been disclosed as a potential diffuser film to be attached to a self-supporting substrate. This film was evaluated optically by being self-laminated to a 2 mm thick plate of float glass.

Control Sample C5

This sample was produced by laminating the diffuser film of EX-5 to the 2 mm plate of float glass using a clear adhesive transfer tape. The tape used was a 50 $\mu$m thick tape No. 8142 by 3M™. The tape was applied to the glass and then the diffuser film was applied to the tape.

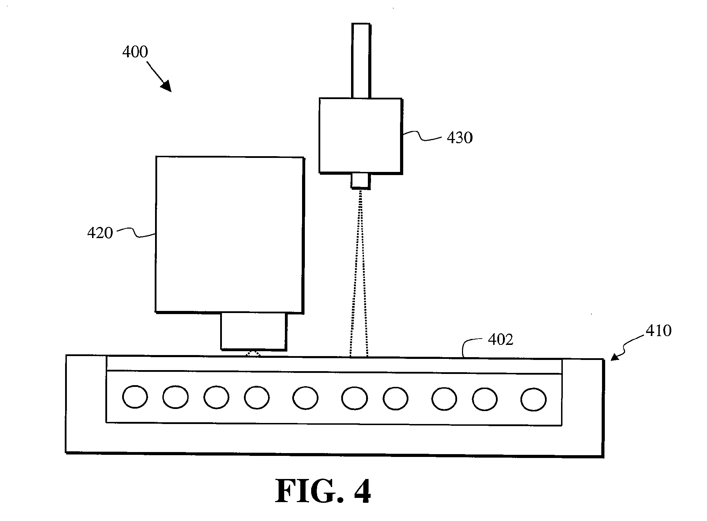

The measurements of brightness comprised an on-axis luminance measurement and an on-axis luminance gain calculation. These measurements along with optical uniformity, for examples EX1-EXS and control samples C1-C5 were performed on a specially designed LCD-TV experimental test bed. The test bed apparatus 400, illustrated schematically in FIG. 4 used a commercial backlight unit 410 to mount and illuminate the samples. Either a diffuser plate 402, or a combination of an optically transmissive self-supporting substrate and a voided polymeric optical diffuser film 402 was placed in the backlight. The samples were then measured optically using either of two measuring devices 420 and 430. A description of the back light unit and the measuring equipment follows:

**Back Light Unit:**

Aquos 20" DBL TV by Sharp Electronics Corporation(**410** in Figure 4).
10 CCFL's
With Diffuser Plate (402 in Figure 4) of thickness, 2mm.
(A 2mm piece of glass was used in place of the Plate Diffuser as the optically transmissive self-supporting substrate when measuring unattached diffuser films, which were placed over the glass, 402 in Figure 4.)

**Measuring Equipment:**

    1.) ELDIM 160R EZ Contrast conscope - 2mm spot size with a 1.2 mm distance from sample.(420 in Figure 4)
    2.) TopCon BM7 colorimeter - 1 deg cone, 5mm spot size, 0.5 meter distance from sample.(430 in Figure 4)

The ELDIM 160R EZ Contrast conscope was used to determine the on-axis luminance emitting from the diffuser plate or from the optically transmissive self-supporting substrate in combination with an unattached diffuser film. On-axis luminance is the intensity of light emitting normal to the diffuser plate or diffuser film surface. Data was reported as the luminance in candela per square meter(cd/m$^2$). The on-axis luminance value for all samples was divided by the on-axis luminance value for the 2mm thick native diffuser plate for the backlight to determine an on-axis luminance gain value.

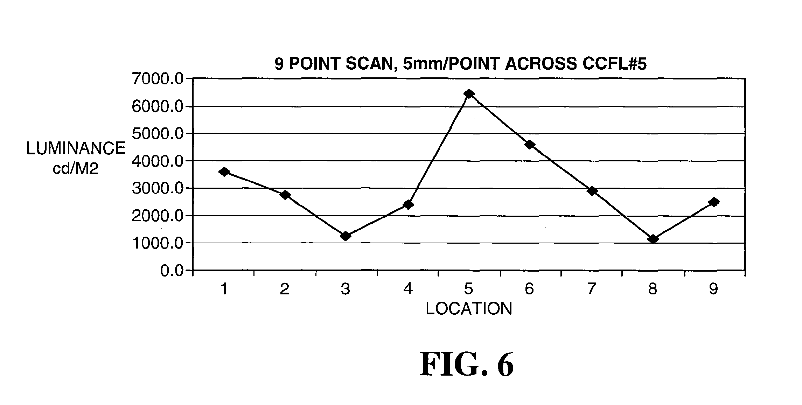

The TopCon BM7 colorimeter was used to measure optical uniformity for all samples. The 5 mm spot size of the instrument was centered over the # 5 of ten CCFL's (spaced nominally 30 mm apart) in the backlight unit to measure luminance. This same measurement was made at 5 mm intervals in 4 different locations either side of the location directly above CCFL # 5, resulting in 9 different measurements nominally centered on CCFL #5. FIG. 6 shows results of these measurements over the CCFL's with no diffuser plate or diffuser film. The peak luminance directly over CCFL #5 is obviously a maximum whereas luminance minimums occur at the approximate locations halfway between CCFL #5 and CCFL #4 on one side and CCFL #6 on the other side. These minimums are approximately at locations 3 and 8 in FIG. 6, respectively. Optical Uniformity is determined by calculating the ratio of the smallest minimum value of luminance in this measurement by the maximum value of luminance made directly over CCFL #5.

Shrinkage testing was done to all diffuser film samples that were configured in an unattached mode to the float glass self-supporting substrate. Thermal shrinkage measurements were performed using samples with dimensions of approximately 35 mm wide by minimum of approximately 6 inches long. Each strip is placed in a punch to obtain a preset 6-inch gauge length. The actual gauge length is measured using a device calibrated with a 6-inch invar bar preset to measure 6-inch samples. This length is recorded to 0.0001 inches using a digital micrometer. Once the initial length is determined, samples are placed in an oven at the prescribed temperature for the necessary time interval (in this case test condition 85 degrees C for 24 hours). Samples are then removed from the oven and placed in a controlled environment set to 23 degrees C and 50 % relative humidity for a minimum of approximately 2 hours but generally approximately 24 hours. The final sample length is re-measured using the same setup used to determine the initial length. The shrinkage is reported in percent using the following equation:

$$\text{Percent Linear Change} = \frac{(\text{final value} - \text{initial value})}{\text{initial value}} \times 100$$

It is noted that the negative (-) sign associated with the shrinkage denotes direction of the change.

The thickness, optical properties, and shrinkage test results of each of the experimental samples and the control samples are summarized in Table I below. In Table I, each row presents the data for a single sample and thickness of only the diffuser film is shown where both an optically transmissive self-supporting substrate and a diffuser film are used in combination for the sample.

**TABLE 1**

| Sample | Tg of Matrix (°C) | Void Initiator Loading (wt%) | Total Thickness (mils/μm) | V.I. Load X Thickness Voided Layer (μm) | On-axis Lum. (cd/m$^2$) | On-axis Lum. Gain | Optical Uniformity | Shrinkage (%) |
|---|---|---|---|---|---|---|---|---|
| EX-1 | 81 | 22 | 2.4/61 | 1342 | 3590 | 0.905 | 0.96 | 0.63 |
| EX-2 | 81 | 20 | 2.1 / 53 | 1060 | 3935 | 0.992 | 0.941 | 0.61 |

(continued)

| Sample | Tg of Matrix (°C) | Void Initiator Loading (wt%) | Total Thickness (mils/$\mu$m) | V.I. Load X Thickness Voided Layer ($\mu$m) | On-axis Lum. (cd/m$^2$) | On-axis Lum. Gain | Optical Uniformity | Shrinkage (%) |
|---|---|---|---|---|---|---|---|---|
| EX-3 | 81 | 20 | 4.4 / 112 (voided-50$\mu$m) | 1000 | 3574 | 0.901 | 0.969 | 0.46 |
| EX-4 | 81 | 7 | 5.5 / 140 | 980 | 3582 | 0.903 | 0.965 | 0.45 |
| EX-5 | 81 | 20 | 2.0/51 | 1020 | 4133 | 1.042 | 0.915 | 0.66 |
| C1 | NA | NA | 80/2030 | NA | 3967 | 1 | 0.952 | NA |
| C2 | -20 | ? | 3.8 / 97 | ? | 3606 | 0.909 | 0.947 | 1.42 |
| C3 | -20 | ? | 3.2 / 81 | ? | 3379 | 0.852 | 0.969 | 1.08 |
| C4 | NA | NA | 95/2.41 | NA | | | | NA |
| C5 | NA | 20 | 84/2.13 | 1020 | 3351 | 0.845 | 0.926 | NA |

The data in Table 1 shows that the diffuser films of the present invention EX-1 thru EX-5 can have optical properties very similar to the commercial plate diffuser C1. The data also shows that the foamed or voided films that were evaluated as comparisons C2 and C3, which could be unattached to the self-supporting substrate, shrink much more than the films of the present invention, EX-1 thru EX-5. These films would not be suitable in this application due to excessive dimensional instability. The data also shows that the acrylic foam tape C4 which was adhered to the glass substrate does not perform well optically, having a much lower on-axis luminance and lower uniformity than the check plate diffuser C1. Comparative sample C5, which is the diffuser film of EX-5 laminated to the glass substrate, shows the benefit of not needing to laminate to the substrate as optical properties can be severely degraded by the addition of an adhesive layer, as shown by the significant drop in on-axis brightness of C5 versus EX-5.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the claims.

The entire contents of the patents and other publications referred to in this specification are incorporated herein by reference.

**PARTS LIST**

100   direct-lit LC display device
110   backlight
112   reflector
114   light sources
120   light management layers
122   diffuser plate
124   collimating diffuser film
126   light directing film
128   reflective polarizer
130   front LC panel assembly
132   lower absorbing polarizer

| 134 | panel plates |
|---|---|
| 136 | LC layer |
| 138 | upper absorbing polarizer |
| 139 | optionallayer(s) |
| 140 | LC panel |
| 150 | controller |
| 200 | light management layers |
| 212 | self-supporting substrate |
| 214 | voided polymeric optical diffuser film |
| 215 | bead coated light collimation film |
| 216 | prismatic light directing film |
| 218 | reflective polarizer |
| 300 | light management layers |
| 312 | optically transmissive self-supporting substrate |
| 314 | voided polymeric optical diffuser film |
| 316 | prismatic light directing film |
| 318 | reflective polarizer |
| 400 | test bed apparatus |
| 402 | either voided polymeric optical diffuser film or diffuser plate |
| 410 | backlight unit |
| 420 | measuring device |
| 430 | measuring device |

**Claims**

1. A light assembly comprising a light source, an optically transmissive self-supporting substrate, and coupled with but unattached to said substrate, a voided high Tg semi-crystalline polymeric optical diffuser film that shrinks less than 1% as a result of thermal shrinkage testing.

2. The light assembly of claim 1, the optical diffuser film comprising an optical brightener.

3. The light assembly of claim 1, the optical diffuser film comprising polyester as the voided polymer.

4. The light assembly of claim 3, the optical diffuser film, wherein the polyester comprises polyethylene terephthalate, polyethylene naphthalate, polylactic acid, or any of their copolymers.

5. The light assembly of claim 3, the optical diffuser film comprises a polyethylene terephthalate with a light transmission value greater than 90.5%.

6. The light assembly of claim 1, the optical diffuser film comprising a void initiator particle.

7. The light assembly of claim 6, the optical diffuser film wherein said void initiator particle is a polyolefin.

8. The light assembly of claim 7, wherein the optical diffuser film comprises polypropylene.

9. The light assembly of claim 7, wherein said polyolefin is present in an amount between 3% and 25% by weight.

10. The light assembly of claim 1, the optical diffuser film wherein said polyolefin is present in an amount between 10% and 20% by weight.

11. The light assembly of claim 1, wherein, for the optical diffuser film, the product of the amount of void initiator in weight percent multiplied by the thickness of the voided layer, in $\mu$m, is between 750 and 1500.

12. The light assembly of claim 11, wherein the product of the amount of void initiator, in weight percent, multiplied by the thickness of the voided layer, in $\mu$m, is between 950 and 1350.

13. The light assembly of claim 2 wherein said optical brightener comprises benzoxazolyll-stilbene compounds.

14. The light assembly of claim 2 wherein said optical brightener comprises 2,2'-(1,2-ethenediyldi-4,1-phenylene)bisbenzoxazole.

15. The light assembly of claim 2 wherein optical brightener is present in an amount between 0.01 and 0.1 wt%.

16. The light assembly of claim 2 wherein the optical brightener is present in an amount between 0.02 and 0.05 wt%.

17. The light assembly of claim 1 wherein the optical diffuser film comprises titanium dioxide.

18. The light assembly of claim 17 wherein titanium dioxide is present in an amount between 0.25 and 5 wt% .

19. The light assembly of claim 1 wherein the optical diffuser film is multilayered.

20. The light assembly of claim 19, wherein a non-voided polymeric layer is adjacent to the optical voided diffuser film on at least 1 side of said voided film.

21. The light assembly of claim 1, comprising a structured surface to control the direction of light rays transmitted through the film.

22. The light assembly of claim 21, wherein said structures are finite curved prismatic structures.

23. The light assembly of claim 21, wherein transparent beads are coated onto said structures.

24. The light assembly of claim 21 wherein an optical modifying layer is coated onto said structures.

25. The light assembly of claim 1 wherein the on-axis luminance gain is greater than 0.90 and the localized uniformity is greater than 0.90.

26. The light assembly of claim 1 further comprising an anti-stat coating.

27. The light assembly of claim 1, wherein the optical diffuser film thickness is between 1 and 10 mils.

28. The light assembly of claim 1 wherein the thickness of said film is between 2 and 6 mils.

29. A lighted display including the light assembly of claim 1.

30. The display of claim 29 including an LC cell located on the opposite side of the optical diffuser film from the light source.

31. The display of claim 30 further including other optical layers between the optical diffuser film and the LC cell.

32. A process for displaying an image comprising transmitting light through the film of claim 1.

33. A voided high Tg semi-crystalline polymeric optical diffuser film that shrinks less than 1% as a result of thermal shrinkage testing that comprises as the voided polymer a polyethylene terephthalate with a light transmission value greater than 90.5%.

**FIG. 1**

EP 1 965 231 A2

FIG. 2

FIG. 3

FIG. 4

FIG. 5

EP 1 965 231 A2

9 POINT SCAN, 5mm/POINT ACROSS CCFL#5

LUMINANCE cd/M2

LOCATION

FIG. 6

EP 1 965 231 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060082699 A
- US 20060092490 A
- US 833713 P